(19) Europäisches Patentamt
European Patent Office
Office européen des brevets

(11) **EP 4 503 056 B1**

(12) **EUROPEAN PATENT SPECIFICATION**

(45) Date of publication and mention
of the grant of the patent:
**05.11.2025   Bulletin 2025/45**

(21) Application number: **22938283.3**

(22) Date of filing: **18.11.2022**

(51) International Patent Classification (IPC):
**G21D 3/04** *(2006.01)*      **G21D 3/14** *(2006.01)*
**G21C 1/08** *(2006.01)*      **G21C 1/09** *(2006.01)*
**G21C 17/035** *(2006.01)*

(52) Cooperative Patent Classification (CPC):
**G21D 3/14; G21C 1/086; G21C 1/09; G21C 17/035;**
Y02E 30/30

(86) International application number:
**PCT/CN2022/132994**

(87) International publication number:
**WO 2023/202064 (26.10.2023 Gazette 2023/43)**

(54) **PRESSURIZER WATER LEVEL CONTROL SYSTEM OF PRESSURIZED WATER REACTOR**

DRUCKWASSERSTANDSSTEUERUNGSSYSTEM EINES DRUCKWASSERREAKTORS

SYSTÈME DE COMMANDE DE NIVEAU D'EAU SOUS PRESSION D'UN RÉACTEUR À EAU SOUS PRESSION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **20.04.2022   CN 202210417514**

(43) Date of publication of application:
**05.02.2025   Bulletin 2025/06**

(73) Proprietors:
- **China Nuclear Power Technology Research Institute Co., Ltd**
  **Shenzhen, Guangdong 518031 (CN)**
- **China Nuclear Power Engineering Co., Ltd.**
  **Shenzhen, Guangdong 518124 (CN)**
- **China General Nuclear Power Corporation**
  **Shenzhen, Guangdong 518028 (CN)**
- **CGN Power Co., Ltd.**
  **Shenzen, Guangdong 518028 (CN)**

(72) Inventors:
- **WANG, Xiaoting**
  **Shenzhen, Guangdong 518031 (CN)**
- **LI, Bingwen**
  **Shenzhen, Guangdong 518031 (CN)**
- **ZHU, Jianmin**
  **Shenzhen, Guangdong 518031 (CN)**
- **ZHANG, Wei**
  **Shenzhen, Guangdong 518031 (CN)**
- **CHEN, Tianming**
  **Shenzhen, Guangdong 518031 (CN)**
- **WEI, Danjing**
  **Shenzhen, Guangdong 518031 (CN)**
- **WANG, Kai**
  **Shenzhen, Guangdong 518031 (CN)**
- **WANG, Weiru**
  **Shenzhen, Guangdong 518031 (CN)**
- **ZHOU, Mingjia**
  **Shenzhen, Guangdong 518031 (CN)**
- **LIU, Yiran**
  **Shenzhen, Guangdong 518031 (CN)**

(74) Representative: **Westphal, Mussgnug  & Partner, Patentanwälte mbB**
**Werinherstraße 79**
**81541 München (DE)**

(56) References cited:
| | |
|---|---|
| CN-A- 101 483 078 | CN-A- 102 543 232 |
| CN-A- 104 282 350 | CN-A- 104 637 557 |
| CN-A- 110 118 171 | CN-A- 110 118 171 |
| CN-A- 112 382 427 | CN-A- 114 251 645 |
| CN-A- 114 999 698 | CN-B- 101 483 078 |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

JP-A- 2002 116 290     JP-B2- 6 479 406
US-A1- 2014 140 466

• "Instrumentation and Control of Nuclear Power Plants", 31 December 2010, ATOMIC ENERGY PRESS, CN, ISBN: 9787502249007, article LIU, GUOFA ET AL.: "Voltage Stabilizer Water Level Control", pages: 171 - 175, XP009550360

**Description**

TECHNICAL FIELD

The invention relates to the field of nuclear power, and more particularly to a pressurizer water level control system of a pressurized water reactor.

DESCRIPTION OF RELATED ART

The pressurizer is an important device for controlling and protecting the pressure of the primary loop in a pressurized water reactor. The pressurizer is connected with the primary loop system through surge line piping, and a sprayer and an electric heater are arranged in the pressurizer, When the reactor is running, the volume of coolant in the primary loop expands and contracts with the increase or decrease of power, thus causing the water level in the pressurizer to rise and fall.

When the pressure in the pressurizer increases as the liquid level increases, the steam can be condensed by spraying water to depressurize; When the pressure drops, the water can be heated by an electric heater to evaporate it, causing the steam density in the steam space to increase to boost the pressure, thereby adjusting the pressure of the entire system and enabling the pressurizer to effectively stabilize the system pressure.

At the same time, the pressurizer acts as a buffer tank for the primary loop coolant, compensating for changes in the water volume of the primary loop system. The pressurizer water level control system maintains the pressurizer water level at a setting value to ensure the pressure regulation characteristics of the pressurizer.

At present, the pressurizer water level control in a pressurized water reactor nuclear power plant is realized by adjusting the charging flow rate or the discharge flow rate, and there are three modes:

> 1, the discharge flow rate is unchanged, and the charging flow rate is adjusted by adjusting the opening of the charge valve, so as to achieve the purpose of controlling the water level of the pressurizer;
> 2, the charging flow level is unchanged, and the discharge flow rate is adjusted by adjusting the opening of the discharge valve, so as to achieve the purpose of controlling the water level of the pressurizer;
> 3. by stating-stopping the charging pump and opening-closing the discharge valve, the charging flow rate and the discharge flow rate are simultaneously adjusted to control the water level of the pressurizer.

Disadvantages: The water level control logic of the pressurizer is complicated, the number of actuating mechanisms in the control system is large, and the equipment occupies a large space.

Publications JP 6 479406 B2, CN 101 483 078 B, JP 2002 116290 A, CN 110 118 171 A, CN 112 382 427 A and CN 114 251 645 A are considered to be relevant to the present application.

BRIEF SUMMARY OF THE INVENTION

A technical problem to be solved by the present invention is to provide a pressurizer water level control system of a pressurized water reactor in view of the above-described drawbacks of the prior art.

The technical scheme adopted by the invention to solve the technical problem is that: a pressurizer water level control system of a pressurized water reactor is constructed, which comprises a heat exchanger, a primary loop system, a temperature measuring module, a water level setting value generating module, a pressurizer, a water level measuring device, a rotational speed control module and a charging pump;

The heat exchanger is communicated with the primary loop system through a charging channel and a discharge channel, respectively;

The temperature measuring module respectively measures the temperatures of the cold leg and the hot leg of the primary loop system, and obtains an average temperature of the primary loop system,

The temperature measuring module is communicatively connected with the water level setting value generating module, and the water level setting value generating module generates a water level setting value $L_{ref}$ of the pressurizer according to the average temperature;

The water level measuring device detects a real-time water level value of the pressurizer;

The rotational speed control module generates a control command for controlling the rotational speed of the charging pump according to the water level setting value and the real-time water level value.

The charging pump is provided in the charging channel to supply water to the primary loop system, and the charging pump controls the water supply speed according to the control command.

In some embodiments, the temperature measuring module comprises a cold leg temperature measuring unit disposed on the cold leg, and a hot leg temperature measuring unit disposed on the hot leg.

In some embodiments, the cold leg temperature measuring unit, the hot leg temperature measuring unit are contact thermometers or infrared thermometers.

In some embodiments, the temperature measuring module further comprises an average temperature generating module, the average temperature generating module averages the measured temperature $T_c$ of the cold leg and measured temperature $T_h$ of the hot leg to generate an average temperature $T_{avg}$ of the primary loop, wherein

$$T_{avg} = (T_h + T_c) / 2.$$

In some embodiments, the water level setting value generating module generates a water level setting value from a fitting relationship according to the average temperature of the primary loop:

$$L_{ref} = f(T_{avg}).$$

In some embodiments, the pressurizer water level control system further comprises a water level deviation range module disposed between the water level setting value generating module and the rotational speed control module, and the water level deviation range module generates a water level deviation signal by performing subtraction according to the real-time water level value and the water level setting value.

In some embodiments, the relationship between a water level deviation range and a water level setting value of the pressurizer is as follows:

$$L_1 = C \times L_{ref}.$$

wherein:

$L_1$ is the water level deviation range, and the unit is % range;
$L_{ref}$ is the water level setting value of the pressurizer, and the unit is % range;
C is a constant, and its value ranges from 0 to 1.

In some embodiments, the water level deviation range module comprises a water level detector.

In some embodiments, the charging pump is set to three rotational speeds $R_0$, $R_1$, $R_2$, and $R_0 < R_1 < R_2$;

When the water level setting value is in the range of $-L_1$ to $L_1$, the charging pump keeps the rotational speed of $R_1$ unchanged;
When the water level deviation of the pressurizer is greater than $L_1$, the rotational speed of the charging pump is switched to the rotational speed $R_0$,

When the water level deviation of the pressurizer is less than $-L_1$, the rotational speed of the charging pump is switched to the rotational speed $R_2$.

In some embodiments, a discharge control mechanism is provided on the discharge channel, and when the water level setting value is within the range of $-L_1$ to $L_1$, the discharge control mechanism balances the flow balance of the charging channel and the discharge channel by adjusting the discharge control mechanism.

In some embodiments, the discharge control mechanism comprises a discharge control valve.

In some embodiments, if the water level deviation gradually decreases until it is less than the range $L_1$-ε, the rotational speed of the charging pump is switched back to the medium rotational speed $R_1$, ε is a constant and less than 1.

In some embodiments, if the water level deviation gradually increases until it is greater than $-L_1 + ε$, the rotational speed of the charging pump is switched back to the medium rotational speed $R_1$, and ε is a constant and less than 1.

The pressurizer water level control system of the pressurized water reactor according to the present invention has the following beneficial effects: the charging pump is adopted as the actuating mechanism of the pressurizer water level control, the switching of different rotational speeds can be realized, and the water level deviation of the pressurizer allowed by operation is set, and the regulation accuracy can be guaranteed while avoiding the frequent action of the actuating mechanism.

BRIEF DESCRIPTION OF THE SEVERAL VIEWS OF THE DRAWINGS

The present invention will be further described below with reference to the accompanying drawings and examples, in which:

FIG. 1 is a schematic diagram of a pressurizer water level control system of a pressurized water reactor according to an embodiment of the present invention;
FIG. 2 is a schematic diagram of the process of pressurizer water level control;
FIG. 3 is a functional graph of the rotational speed control of a charging pump.

DETAILED DESCRIPTION OF THE INVENTION

In order to have a clearer understanding of the technical features, objects and effects of the present invention, specific embodiments of the present invention will now be described in detail with reference to the accompanying drawings.

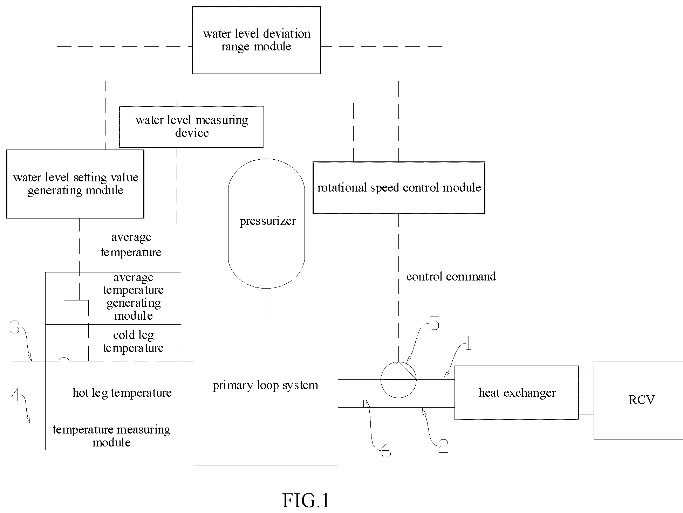

As shown in FIG. 1, a pressurizer water level control system of a pressurized water reactor according to a preferred embodiment of the present invention comprises a heat exchanger, a primary loop system, a temperature measuring module, a water level setting value generating module, a pressurizer, a water level measuring device, and a charging pump 5.

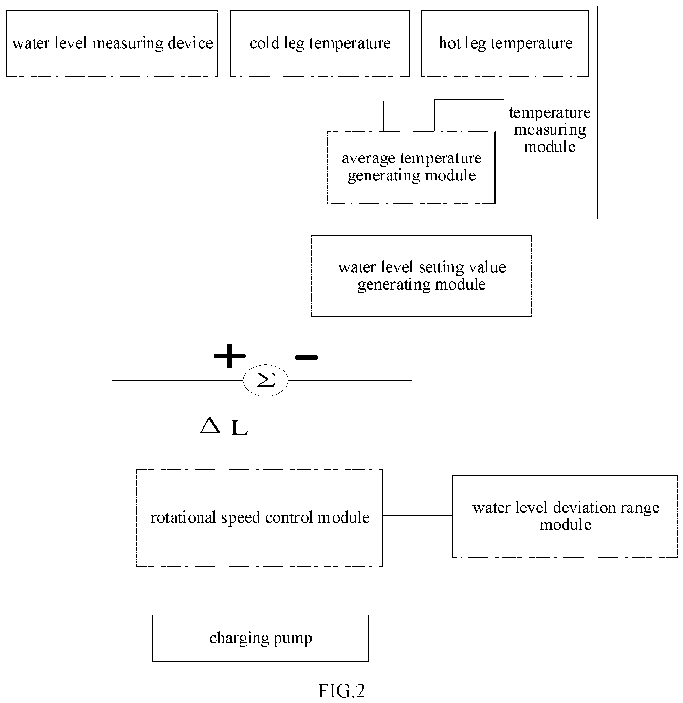

As shown in FIG. 1 and FIG. 2, the heat exchanger is communicated with the RCV(Chemical and Volume Control System), and the heat exchanger is communicated with the primary loop system through a charging channel 1 and a discharge channel 2, respectively, and the charging channel 1 supplies water to the primary loop system and replenishes water into the pressurizer. The water in the primary loop system flows out through the discharge channel 2, lowering the water level of the pressurizer.

The primary loop system comprises a pressure vessel, a main pump, a primary side of the steam generator and corresponding piping, and further, the primary loop system comprises a cold leg 3 and a hot leg 4, respectively supplying the flow of cold water and hot water. The temperature measuring module measures the temperatures of the cold leg 3 and the hot leg 4 of the primary loop system respectively, and obtains the average temperature of the primary loop system.

The temperature measuring module is communicatively connected to a water level setting value generating module, and the water level setting value generating module generates a water level setting value $L_{ref}$ of the pressurizer according to the average temperature.

The water level measuring device detects the real-time water level value of the pressurizer, and the rotational speed control module generates a control command for controlling the rotational speed of the charging pump 5 according to the water level setting value and the real-time water level value.

The charging pump 5 is provided in the charging channel 1 to supply water to the primary loop system, and the charging pump 5 controls the water supply speed according to the control command.

By adopting the charging pump 5 as the actuating mechanism of the pressurizer water level control, the switching of different rotational speeds can be realized, and the water level deviation of the pressurizer allowed by operation is set, which can avoid frequent action of the actuating mechanism and ensure the adjustment accuracy.

In some embodiments, the temperature measuring module comprises a cold leg temperature measuring unit disposed on the cold leg 3, and a hot leg temperature measuring unit disposed on the hot leg 4. Generally, the cold leg temperature measuring unit and the hot leg temperature measuring unit are contact thermometers or infrared thermometers, and thermometers are respectively arranged in the cold leg 3 and the hot leg 4 of the primary loop for measuring the temperatures of the cold leg 3 and the hot leg 4 of the primary loop, thereby obtaining an average temperature.

Further, the temperature measuring module further comprises an average temperature generating module, and the average temperature generating module averages the measured temperature $T_c$ of the cold leg 3 and the measured temperature $T_h$ of the hot leg 4 to generate an average temperature $T_{avg}$ of the primary loop, wherein

$$. T_{avg} = (T_h + T_C) \,/\, 2$$

In other embodiments, the average temperature generating module may also multiply one of the temperature of the cold leg 3 and the temperature of the hot leg 4 by a coefficient, and then add to the other and average it.

Preferably, the water level setting value generating module generates the water level setting value of the pressurizer according to the average temperature of the primary loop from the fitting relationship equation $L_{ref} = f(T_{avg})$.

In some embodiments, the pressurizer water level control system further comprises a water level deviation range module disposed between the water level setting value generating module and the rotational speed control module, and the water level deviation range module performs subtraction based on the real-time water level value and the water level setting value to generate a water level deviation signal.

Further, the relationship between the water level deviation range and the water level setting value of the pressurizer is as follows:

$$L_1 = C \times L_{ref} \quad ^{L_1 = C \times Lref} .$$

wherein:

$L_1$ is the water level deviation range, and the unit is % range;
$L_{ref}$ is the water level setting value of the pressurizer, and the unit is % range;
C is a constant, and the value ranges from 0 to 1. C can be set according to the actual situation, such as 0.1, 0.5, 0.9, 1, etc.

In some embodiments, the water level deviation range module comprises a water level detector for detecting a real-time water level value of the water level, performing subtraction according to the real-time water level value and the water level setting value to generate a water level deviation signal, and the present invention realizes the following functions by setting the water level deviation range signal:

When the water level of the pressurizer is high, a larger deviation amount is set to allow a larger deviation, which is beneficial to avoid frequent action of the actuating mechanism when the water level is high;
When the water level of the pressurizer is low, a reduced deviation amount is set to allow a small deviation, which is beneficial to improving the water level adjustment accuracy of the pressurizer and avoiding triggering of the protection signal due to the obvious deviation of the water level from the setting value.

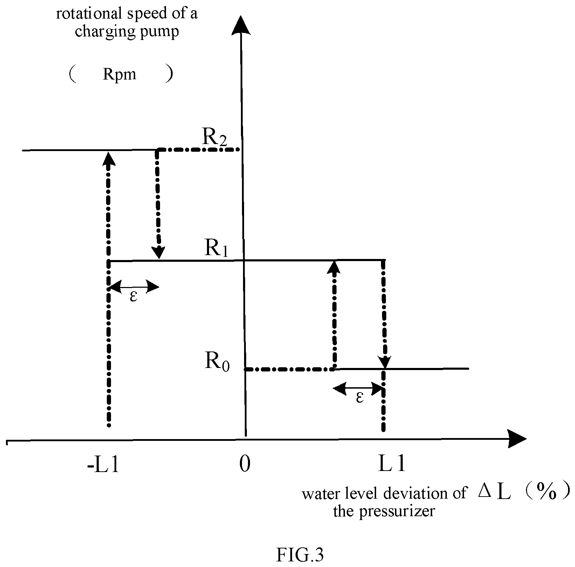

With reference to FIG. 2 and FIG. 3, further, in order to allow the charging pump 5 to adapt to the requirements of different charging amounts, the charging pump 5 is set to three rotational speeds $R_0$, $R_1$, and $R_2$, and $R_0 < R_1 < R_2$, and the relationship between the rotational speed demand of the charging pump 5 and the deviation of the water level of the pressurizer is shown in FIG. 3.

During stable operation, that is, when the water level setting value is in the range of $-L_1$ to $L_1$, the charging pump 5 keeps the rotational speed of $R_1$ unchanged.

When the water level deviation of the pressurizer is greater than $L_1$, the rotational speed of the charging pump 5 is switched to the rotational speed $R_0$, and if the water level deviation gradually decreases until it is less than $L_1-\varepsilon$, the rotational speed of the charging pump 5 is switched back to the medium rotational speed $R_1$, and $\varepsilon$ is a constant and less than 1, such as 0.1, 0.5, 0.9, etc.

When the water level deviation of the pressurizer is less than $-L_1$, the rotational speed of the charging pump 5 is switched to the rotational speed $R_2$, and further, if the water level deviation gradually increases until it is in the range greater than $-L_1 + \varepsilon$, the rotational speed of the charging pump 5 is switched back to the medium rotational speed $R_1$, as above, $\varepsilon$ is a constant and less than 1, such as 0.1, 0.5, 0.9, etc.

Preferably, the discharge control mechanism 6 is provided on the discharge channel 2, and when the water level setting value is within the range of $-L_1$ to $L_1$, the discharge control mechanism 6 balances the flow of the charging channel 1 and the discharge channel 2, so that the water level of the pressurizer can be maintained near the setting value. In this embodiment, the discharge control mechanism 6 comprises a discharge control valve, and the flow of the charging channel 1 and the discharge channel 2 is balanced by manually adjusting the discharge control valve. In other embodiments, the discharge control mechanism 6 may also be an electrical control switch.

Generally, a charging flow meter (not shown) is provided on the charging channel 1, and a discharge flow meter (not shown) is provided on the discharge channel 2. The charging flow rate and the discharge flow rate are not used in the water level control of the pressurizer according to the present invention, but are only used for monitoring.

The water level signal of the pressurizer and the water level setting value of the pressurizer generated by the average temperature of the primary loop are sent to the rotational speed control module; After the rotational speed control module performs real-time calculation and processing, a rotational speed switching command of the charging pump 5 is generated and sent to the charging pump 5, and the charging flow rate is adjusted by the charging pump 5 to realize water level control of the pressurizer.

According to the above description, the rotational speed control module of the charging pump 5 allows a certain deviation between the water level of the pressurizer and the setting value during normal operation of the reactor, and effectively avoids frequent operation of the charging pump 5.

At the same time, when the water level deviation is large, the rotational speed switching of the charging pump 5 can realize the rapid adjustment of the charging flow rate, so that the water level of the pressurizer can be quickly restored to the vicinity of the setting value.

The hysteresis $\varepsilon$ is required to switch the speed of the charging pump 5 to avoid frequent switching of the speed of the charging pump 5 when the water level deviation $\Delta L$ of the pressurizer is near $-L_1$ and $L_1$. The charging pump 5 has three operating conditions, and can realize the adjustment of different charging flow rates.

The actuating mechanism required by the present invention is the charging pump 5, and the charging pump 5 only needs to have three operating conditions, and each operating condition point has a corresponding main pump rotational speed and flow rate.

The charging pump 5 is operated only at three working conditions, which greatly reduces the frequency conversion equipment of the charging pump 5 and is beneficial to saving the equipment space of the pressurized water reactor.

The water level of the pressurizer is controlled by adjusting the charging flow rate and keeping the discharge flow rate unchanged. The water level setting value of the pressurizer is determined by the average temperature of the primary loop, the water level setting value of the pressurizer are input to the water level deviation range module, and the deviation between the measured water level value of the pressurizer and the setting value are input to the rotational speed control module of the charging pump 5 to generate the rotational speed signal of the charging pump 5, which is transmitted to the charging pump 5. The charging flow rate is changed by switching the rotational speed of the charging pump 5.

An appropriate pressurizer water level control actuating mechanism and control system are adopted to meet the requirements of the pressurizer water level control of the pressurized water reactor.

Advantages of the present invention:

1, The control system does not need to control the discharge regulating valve, and at the same time, the charging regulating valve is omitted, only the charging pump 5 serves as the actuating mechanism of the pressurizer water level control system, and the number of actuating mechanisms is reduced, such as reducing the configuration of the charging valve and the discharge valve, etc., the charging pump 5 has three operating conditions, reducing the frequency conversion equipment of the charging pump (5), which is beneficial to simplifying the equipment configuration;

2. Setting the water level deviation of the pressurizer allowed for operation is beneficial to avoid frequent action of the actuating mechanism and ensure the adjustment accuracy;

3. The invention does not need to set a PI controller, the control channel is more simplified, the water level control scheme of the pressurizer is simplified, the control setting value is reduced, and it is beneficial to simplify the debugging process.

4. The pressurizer water level control system allows a certain deviation between the water level and the setting value of the pressurizer during normal operation of the reactor (within the range of $-L_1$ to $L_1$). The control logic is relatively simple and requires few actuating mechanisms. It can be applied to the pressurizer water level control of the pressurized water reactor.

It is understood that the above-described technical features can be used in any combination without limitation.

## Claims

1. A pressurizer water level control system of a pressurized water reactor, the pressurizer water level control system comprising a heat exchanger, a primary loop system, a temperature measuring module, a water level setting value generating module, a pressurizer, a water level measuring device, a rotational speed control module, and a charging pump (5);

   the heat exchanger is communicated with the primary loop system through a charging channel (1) and a discharge channel (2) respectively;
   the temperature measuring module respectively measures the temperatures of the cold leg (3) and the hot leg (4) of the primary loop system, and obtains the average temperature of the primary loop system;
   the temperature measuring module is communicatively connected with the water level setting value generating module, and the water level setting value generating module generates a water level setting value $L_{ref}$ of the pressurizer according to the average temperature;
   the water level measuring device detects a real-time water level value of the pressurizer;
   the rotational speed control module generates a control command for controlling the rotational speed of the charging pump (5) according to the water level setting value and the real-time water level value;
   the charging pump (5) is arranged in the charging channel (1) to supply water to the primary loop system, and the charging pump (5) controls the water supply speed according to the control command.

2. The pressurizer water level control system of the pressurized water reactor according to claim 1, wherein the temperature measuring module comprises a cold leg temperature measuring unit arranged on the cold leg (3) and a hot leg temperature measuring unit arranged on the hot leg (4).

3. The pressurizer water level control system of the pressurized water reactor according to claim 2, wherein the cold leg temperature measuring unit and the hot leg temperature measuring unit are contact thermometers or infrared thermometers.

4. The pressurizer water level control system of the pressurized water reactor according to claim 2, wherein the temperature measuring module further comprises an average temperature generating module, and the average temperature generating module averages the measured temperature $T_c$ of the cold leg (3) and the measured temperature $T_h$ of the hot leg (4) to generate an average temperature $T_{avg}$ of the primary loop, wherein

$$T_{avg} = (T_h + T_c) / 2.$$

5. The pressurizer water level control system of the pressurized water reactor according to claim 3, wherein the water level setting value generating module generates a pressurizer water level setting value by a fitting relationship according to the average temperature of the primary loop:

$$L_{ref} = f(T_{avg}).$$

6. The pressurizer water level control system of the pressurized water reactor according to any one of claims 1 to 5, wherein the pressurizer water level control system further comprises a water level deviation range module arranged between the water level setting value generating module and the rotational speed control module, and the water level deviation range module performs subtraction according to the real-time water level value and the water level setting value and generates a water level deviation signal.

7. The pressurizer water level control system of the pressurized water reactor according to claim 6, wherein the relationship between a water level deviation range and a water level setting value of the pressurizer is as follows:

$$L_1 = C \times L_{ref};$$

wherein:

$L_1$ is the water level deviation range, and the unit is % range;

$L_{ref}$ is the water level setting value of the pressurizer, and the unit is % range;

C is a constant, and its value range is between 0 and 1.

8. The pressurizer water level control system of the pressurized water reactor according to claim 6, wherein the water level deviation range module comprises a water level detector.

9. The pressurizer water level control system of the pressurized water reactor according to claim 7, wherein the charging pump (5) is set to three rotational speeds $R_0$, $R_1$, and $R_2$, and $R_0 < R_1 < R_2$;

   when the water level setting value is in the range of $-L_1$ to $L_1$, the charging pump (5) keeps the rotating speed of $R_1$ unchanged;
   when the water level deviation of the pressurizer is greater than $L_1$, the rotating speed of the charging pump (5) is switched to the rotating speed $R_0$,
   when the water level deviation of the pressurizer is less than $-L_1$, the rotating speed of the charging pump (5) is switched to the rotating speed $R_2$.

10. The pressurizer water level control system of the pressurized water reactor according to claim 9, wherein a discharge control mechanism (6) is provided on the discharge channel (2), and when the water level setting value is within the range of $-L_1$ to $L_1$, the discharge control mechanism (6) balances the flow balance of the charging channel (1) and the discharge channel (2).

11. The pressurizer water level control system of the pressurized water reactor according to claim 10, wherein the discharge control mechanism (6) comprises a discharge control valve.

12. The pressurizer water level control system of the pressurized water reactor according to claim 9, wherein if the water level deviation gradually decreases until it is less than $L_1$-$\varepsilon$, the rotational speed of the charging pump (5) is switched back to the medium rotational speed $R_1$, and $\varepsilon$ is a constant and less than 1.

13. The pressurizer water level control system of the pressurized water reactor according to claim 9, wherein if the water level deviation gradually increases until it is in a range greater than $-L_1 + \varepsilon$, the rotational speed of the charging pump (5) is switched back to the medium rotational speed $R_1$, and $\varepsilon$ is a constant and less than 1.

**Patentansprüche**

1. Ein Druckhalter-Wasserstandsteuersystem eines Druckwasserreaktors, wobei das Druckhalter-Wasserstandsteuersystem einen Wärmetauscher, ein Primärkreislaufsystem, ein Temperaturmessmodul, ein Modul zur Erzeugung eines Wasserstandssollwerts, einen Druckhalter, eine Wasserstandsmessvorrichtung, ein Drehzahlsteuermodul und eine Ladepumpe (5) umfasst;

   der Wärmetauscher jeweils über einen Ladekanal (1) und einen Entladekanal (2) mit dem Primärkreislaufsystem verbunden ist;
   das Temperaturmessmodul jeweils die Temperaturen des kalten Strangs (3) und des warmen Strangs (4) des Primärkreislaufsystems misst und die Durchschnittstemperatur des Primärkreislaufsystems ermittelt;
   das Temperaturmessmodul kommunikativ mit dem Modul zur Erzeugung des Wasserstandssollwerts verbunden ist, und das Modul zur Erzeugung des Wasserstandssollwerts einen Wasserstandssollwert $L_{ref}$ des Druckhalters entsprechend der Durchschnittstemperatur erzeugt;
   das Wasserstandsmessgerät einen Echtzeit-Wasserstandswert des Druckhalters erfasst;
   das Drehzahlsteuermodul ein Steuerkommando zur Steuerung der Drehzahl der Ladepumpe (5) entsprechend dem Wasserstandssollwert und dem Echtzeit-Wasserstandswert erzeugt;
   die Ladepumpe (5) im Ladekanal (1) angeordnet ist, um das Primärkreislaufsystem mit Wasser zu versorgen, und die Ladepumpe (5) die Wasserzufuhrgeschwindigkeit entsprechend dem Steuerkommando steuert.

2. Das Druckhalter-Wasserstandsteuersystem des Druckwasserreaktors gemäß Anspruch 1, wobei das Temperaturmessmodul eine am kalten Strang (3) angeordnete Kaltstrangtemperaturmesseinheit und eine am heißen Strang (4) angeordnete Heißstrangtemperaturmesseinheit umfasst.

3. Das Druckhalter-Wasserstandsteuersystem des Druckwasserreaktors gemäß Anspruch 2, wobei die Kaltstrangtemperaturmesseinheit und die Heißstrangtemperaturmesseinheit Kontaktthermometer oder Infrarotthermometer sind.

4. Das Druckhalter-Wasserstandsteuersystem des Druckwasserreaktors gemäß Anspruch 2, wobei das Temperaturmessmodul ferner ein Durchschnittstemperatur-Erzeugungsmodul umfasst und das Durchschnittstemperatur-Erzeugungsmodul die gemessene Temperatur $T_c$ des kalten Strangs (3) und die gemessene Temperatur $T_h$ des heißen

Strangs (4) mittelt, um eine Durchschnittstemperatur $T_{avg}$ des Primärkreislaufs zu erzeugen, wobei

$$T_{avg} = (T_h + T_C)/2.$$

5. Das Druckhalter-Wasserstandsteuersystem des Druckwasserreaktors gemäß Anspruch 3, wobei das Modul zur Erzeugung des Wasserstands-Sollwerts einen Druckhalter-Wasserstands-Sollwert durch eine Anpassungsbeziehung entsprechend der Durchschnittstemperatur des Primärkreislaufs erzeugt:

$$L_{ref} = f(T_{avg}).$$

6. Das Druckhalter-Wasserstandsteuersystem des Druckwasserreaktors gemäß einem der Ansprüche bis 5, wobei das Druckhalter-Wasserstandsteuersystem ferner ein Wasserstandsabweichungsbereichsmodul umfasst, das zwischen dem Wasserstandssollwert-Erzeugungsmodul und dem Drehzahlsteuermodul angeordnet ist, und das Wasserstandsabweichungsbereichsmodul eine Subtraktion entsprechend dem Echtzeit-Wasserstandswert und dem Wasserstandssollwert durchführt und ein Wasserstandsabweichungssignal erzeugt.

7. Das Druckhalter-Wasserstandsteuersystem des Druckwasserreaktors gemäß Anspruch 6, wobei die Beziehung zwischen einem Wasserstandsabweichungsbereich und einem Wasserstandssollwert des Druckhalters wie folgt ist:

$$L_1 = C \times L_{ref};$$

wobei:

L$_1$ der Wasserstandsabweichungsbereich ist und die Einheit %-Bereich ist;
L$_{ref}$ der Wasserstandssollwert des Druckhalters ist und die Einheit %-Bereich ist;
C eine Konstante ist und ihr Wertebereich zwischen 0 und 1 liegt.

8. Das Druckhalter-Wasserstandsteuersystem des Druckwasserreaktors gemäß Anspruch 6, wobei das Wasserstandsabweichungsbereichsmodul einen Wasserstandsdetektor umfasst.

9. Das Druckhalter-Wasserstandsteuersystem des Druckwasserreaktors gemäß Anspruch 7, wobei die Ladepumpe (5) auf drei Drehzahlen $R_0$, $R_1$, and $R_2$ eingestellt ist, und $R_0 < R_1 < R_2$;

wenn der Wasserstandssollwert im Bereich von -L$_1$ bis L$_1$ liegt, die Ladepumpe (5) die Drehzahl $R_1$ unverändert beibehält;
wenn die Wasserstandsabweichung des Druckhalters größer als L$_1$ ist, die Drehzahl der Ladepumpe (5) auf die Drehzahl $R_0$ umgeschaltet wird;
wenn die Wasserstandsabweichung des Druckhalters kleiner als -L$_1$ ist, die Drehzahl der Ladepumpe (5) auf die Drehzahl $R_2$ umgeschaltet wird.

10. Das Druckhalter-Wasserstandsteuersystem des Druckwasserreaktors gemäß Anspruch 9, wobei am Entladekanal (2) ein Entladesteuermechanismus (6) vorgesehen ist, und wenn der Wasserstands-Sollwert im Bereich von -L$_1$ bis L$_1$ liegt, der Entladesteuermechanismus (6) das Strömungsgleichgewicht zwischen dem Ladekanal (1) und dem Entladekanal (2) ausgleicht.

11. Das Druckhalter-Wasserstandsteuersystem des Druckwasserreaktors gemäß Anspruch 10, wobei der Entladesteuermechanismus (6) ein Entladesteuerventil umfasst.

12. Das Druckhalter-Wasserstandsteuersystem des Druckwasserreaktors gemäß Anspruch 9, wobei, wenn die Wasserstandsabweichung allmählich abnimmt, bis sie kleiner als L$_1$-ε ist, die Drehzahl der Ladepumpe (5) wieder auf die mittlere Drehzahl $R_1$ umgeschaltet wird, und ε konstant und kleiner als 1 ist.

13. Das Druckhalter-Wasserstandsteuersystem des Druckwasserreaktors gemäß Anspruch 9, wobei, wenn die Wasserstandsabweichung allmählich zunimmt, bis sie in einem Bereich größer als -L$_1$ + ε ist, die Drehzahl der Ladepumpe (5) wieder auf die mittlere Drehzahl $R_1$ umgeschaltet wird, und ε konstant und kleiner als 1 ist.

**Revendications**

1. Système de contrôle de niveau d'eau de pressuriseur d'un réacteur à eau sous pression, le système de contrôle de niveau d'eau de pressuriseur comprenant un échangeur de chaleur, un système de boucle primaire, un module de mesure de température, un module de génération de valeur de réglage du niveau d'eau, un pressuriseur, un dispositif de mesure du niveau d'eau, un module de contrôle de la vitesse de rotation et une pompe de charge (5) ;

l'échangeur de chaleur communique avec le système de boucle primaire par un canal de charge (1) et un canal de décharge (2) respectivement ;

le module de mesure de température mesure respectivement les températures de la branche froide (3) et de la branche chaude (4) du système de boucle primaire et obtient la température moyenne du système de boucle primaire ; le module de mesure de température est connecté en communication avec le module de génération de la valeur de consigne du niveau d'eau, et le module de génération de la valeur de consigne du niveau d'eau génère une valeur de consigne du niveau d'eau $L_{ref}$ du pressuriseur en fonction de la température moyenne ;

le dispositif de mesure du niveau d'eau détecte une valeur en temps réel du niveau d'eau du pressuriseur ;

le module de contrôle de la vitesse de rotation génère une commande de contrôle pour contrôler la vitesse de rotation de la pompe de charge (5) en fonction de la valeur de consigne du niveau d'eau et de la valeur en temps réel du niveau d'eau ;

la pompe de charge (5) est disposée dans le canal de charge (1) pour alimenter en eau le système de boucle primaire, et la pompe de charge (5) régule la vitesse d'alimentation en eau en fonction de la commande de contrôle.

2. Le système de contrôle de niveau d'eau de pressuriseur du réacteur à eau sous pression selon la revendication 1, dans lequel le module de mesure de température comprend un module de mesure de température de branche froide disposée sur la branche froide (3) et un module de mesure de température de branche chaude disposée sur la branche chaude (4).

3. Le système de contrôle de niveau d'eau de pressuriseur du réacteur à eau sous pression selon la revendication 2, dans lequel le module de mesure de la température de la branche froide et le module de mesure de la température de la branche chaude sont des thermomètres à contact ou des thermomètres infrarouges.

4. Le système de contrôle de niveau d'eau de pressuriseur du réacteur à eau sous pression selon la revendication 2, dans lequel le module de mesure de température comprend en outre un module de génération de température moyenne, et le module de génération de température moyenne calcule la moyenne de la température mesurée $T_c$ de la branche froide (3) et de la température mesurée $T_h$ de la branche chaude (4) pour générer une température moyenne $T_{avg}$ de la boucle primaire, dans lequel

$$T_{avg} = (T_h + T_C)/2.$$

5. Le système de contrôle de niveau d'eau de pressuriseur du réacteur à eau sous pression selon la revendication 3, dans lequel le module de génération de valeur de réglage du niveau d'eau génère une valeur de réglage du niveau d'eau du pressuriseur par une relation d'ajustement en fonction de la température moyenne de la boucle primaire :

$$L_{ref} = f(T_{avg}).$$

6. Le système de contrôle de niveau d'eau de pressuriseur du réacteur à eau sous pression selon l'une des revendications 1 à 5, dans lequel le système de contrôle de niveau d'eau du pressuriseur comprend en outre un module de plage de déviation du niveau d'eau disposé entre le module de génération de valeur de réglage du niveau d'eau et le module de contrôle de la vitesse de rotation, et le module de plage de déviation du niveau d'eau effectue une soustraction en fonction de la valeur en temps réel du niveau d'eau et de la valeur de réglage du niveau d'eau et génère un signal de déviation du niveau d'eau.

7. Le système de contrôle de niveau d'eau de pressuriseur du réacteur à eau sous pression selon la revendication 6, dans lequel la relation entre une plage d'écart du niveau d'eau et une valeur de réglage du niveau d'eau du pressuriseur est la suivante :

$$L_1 = C \times L_{ref};$$

dans lequel:

$L_1$ est la plage d'écart du niveau d'eau, et l'unité est en % ;
$L_{ref}$ est la valeur de réglage du niveau d'eau du pressuriseur, et l'unité est en % ;
$C$ est une constante, et sa plage de valeur est comprise entre 0 et 1.

8. Le système de contrôle de niveau d'eau de pressuriseur du réacteur à eau sous pression selon la revendication 6, dans lequel le module de plage de déviation du niveau d'eau comprend un détecteur de niveau d'eau.

9. Le système de contrôle de niveau d'eau de pressuriseur du réacteur à eau sous pression selon la revendication 7, dans lequel la pompe de charge (5) est réglée sur trois vitesses de rotation $R_0$, $R_1$, et $R_2$, et $R_0 < R_1 < R_2$;

lorsque la valeur de réglage du niveau d'eau est comprise entre $-L_1$ et $L_1$, la pompe de charge (5) maintient la vitesse de rotation de $R_1$ inchangée ; lorsque l'écart de niveau d'eau du pressuriseur est supérieur à $L_1$, la vitesse de rotation de la pompe de charge (5) passe à la vitesse de rotation $R_0$ ; lorsque l'écart de niveau d'eau du pressuriseur est inférieur à $- L_1$, la vitesse de rotation de la pompe de charge (5) passe à la vitesse de rotation $R_2$.

10. Le système de contrôle de niveau d'eau de pressuriseur du réacteur à eau sous pression selon la revendication 9, dans lequel un mécanisme de contrôle de décharge (6) est prévu sur le canal de décharge (2), et lorsque la valeur de réglage du niveau d'eau est comprise dans la plage de $-L_1$ à $L_1$, le mécanisme de contrôle de décharge (6) équilibre l'équilibre du débit du canal de charge (1) et du canal de décharge (2).

11. Le système de contrôle de niveau d'eau de pressuriseur du réacteur à eau sous pression selon la revendication 10, dans lequel le mécanisme de contrôle de décharge (6) comprend une soupape de contrôle de décharge.

12. Le système de contrôle de niveau d'eau de pressuriseur du réacteur à eau sous pression selon la revendication 9, dans lequel si l'écart du niveau d'eau diminue progressivement jusqu'à être inférieur à $L_1$-$\varepsilon$, la vitesse de rotation de la pompe de charge (5) est ramenée à la vitesse de rotation moyenne $R_1$, et $\varepsilon$ est une constante et inférieure à 1.

13. Le système de contrôle de niveau d'eau de pressuriseur du réacteur à eau sous pression selon la revendication 9, dans lequel si l'écart du niveau d'eau augmente progressivement jusqu'à se situer dans une plage supérieure à $-L_1 + \varepsilon$, la vitesse de rotation de la pompe de charge (5) est ramenée à la vitesse de rotation moyenne $R_1$, et $\varepsilon$ est une constante et inférieure à 1.

water level deviation
range module

water level measuring
device

water level setting value
generating module

rotational speed control module

pressurizer

average
temperature

average
temperature
generating
module

cold leg
temperature

3

hot leg temperature

4

temperature measuring
module

primary loop system

control command

5

1

heat exchanger

RCV

6

2

FIG.1

FIG.2

FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6479406 B
- CN 101483078 B
- JP 2002116290 A

- CN 110118171 A
- CN 112382427 A
- CN 114251645 A